# FASCICULE DE BREVET EUROPEEN

(11) **EP 2 285 515 B1**
(45) Date de publication et mention de la délivrance du brevet: **10.04.2013**
(21) Numéro de dépôt: 09745994.5
(22) Date de dépôt: 24.04.2009
(51) Int. Cl.: B23B 27/22, B23Q 1/34, B23B 47/34

(54) **Procédé et dispositif d'usinage**
Bearbeitungsverfahren und vorrichtung
Machining method and device

(30) Priorité: 25.04.2008 FR 0852788
(43) Date de publication de la demande: 23.02.2011
(73) Titulaire: European Aeronautic Defence and Space Company EADS France, 75016 Paris (FR); Ecole Nationale Superieure D'arts Et Metiers, 13100 Aix en Provence (FR); Centre National de la Recherche Scientifique, 75016 Paris (FR)
(72) Inventeur: RABATE, Patrice, F-80800 Lahoussoye (FR); MORARU, George-Florin, F-13090 Aix-en-Provence (FR)
(74) Mandataire: Schmit, Christian Norbert Marie
(86) Numéro de dépôt international: PCT/FR2009/050764
(87) Numéro de publication internationale: WO 2009/138675

(56) Documents cités:
- WO-A1-2007/131936
- DE-C- 352 816
- FR-A- 935 374
- FR-A- 1 271 691
- FR-A- 1 576 433
- FR-A- 2 901 163
- FR-A1- 2 611 547
- SU-A1- 1 296 306
- SU-A2- 1 349 882

## Description

La présente invention appartient au domaine de l'usinage des matériaux dit par enlèvement de matière au moyen d'outils coupants.

Plus particulièrement l'invention concerne l'usinage de matériaux dont la matière enlevée est détachée sous la forme de copeaux, en particulier dans les cas de réalisation d'alésages ou lors d'opérations d'usinage par tournage. Un tel procédé est décrit dans le préambule de la revendication 1 et un tel outil est décrit dans le préambule de la revendication 7.

L'usinage par enlèvement de matière au moyen d'outils coupants est une technique ancienne et bien connue en matière d'usinage des matériaux tels que les matériaux métalliques ou certains matériaux plastiques.

Le plus souvent la matière enlevée forme des copeaux d'usinage, dont les dimensions dépendent de nombreux paramètres liés au matériau usiné et aux paramètres de coupe, copeaux qui sont en général de faibles épaisseurs, épaisseurs dépendant de la profondeur d'usinage, et de longueurs plus ou moins importantes suivant le moment dans l'opération d'usinage où le copeau en cours de formation se brise en raison de sa fragilité.

Dans les usinages de précision il est essentiel que les copeaux soient correctement évacués pour éviter que ceux-ci ne viennent se placer entre la pièce en cours d'usinage et l'outil coupant pour ne pas engendrer des effets néfastes sur l'outil, par exemple en détériorant les capacités de coupe ou en conduisant au bris de l'outil, et sur la pièce, par exemple en détériorant l'état de la surface usinée ou un usinage hors des tolérances recherchées.

Différentes techniques sont connues pour faciliter l'évacuation de copeaux de la zone en cours d'usinage.

L'aspiration et le soufflage sont des techniques de bien connues mais elles s'avèrent souvent insuffisantes à elles seules, en particulier lorsque les copeaux sont difficiles à évacuer de façon naturelle, par exemple en raison de leur longueur et ou de leur emplacement comme par exemple au fond d'un alésage en cours de réalisation.

Pour faciliter l'évacuation des copeaux, il est aussi connu dans le domaine du perçage de faciliter la rupture des copeaux en cours de formation afin d'en limiter la longueur, un copeau court étant plus facile à évacuer qu'un copeau long.

Pour favoriser la rupture des copeaux pendant l'usinage, la géométrie de l'extrémité coupante de certains outils de coupe est adaptée de telle sorte que la trajectoire du copeau est modifiée.

Outre le fait que la rupture n'est pas garantie par ces géométries d'extrémité adaptées, chaque condition de coupe requiert une géométrie propre et un outil particulier ne peut donc être utilisé avec une certaine efficacité que pour les conditions de coupe (matériau, avance, vitesse...) pour lesquelles il a été conçu.

Une autre méthode pour générer des copeaux de longueurs réduites consiste dans le domaine du perçage à faire osciller suivant la direction de son axe de rotation l'outil coupant.

Dans certains dispositifs utilisant cette méthode, l'oscillation est réalisée par un mécanisme d'entraînement longitudinal de l'outil coupant suivant un mouvement alternatif forcé.

Dans d'autres dispositifs, tel que celui décrit dans la demande de brevet FR2901163, l'oscillation est réalisée par une vibration axiale auto-entretenue par des moyens élastiques associés à l'outil et par le choix de paramètres de coupe qui déclenchent et entretiennent la vibration axiale avec des fréquences et amplitudes souhaitées.

Ces dispositifs ont cependant l'inconvénient de présenter une complexité certaines et ont le défaut de soumettre la pièce en cours de perçage, l'outil et la machine d'entraînement de l'outil à des sollicitations fortes qui peuvent induire des déformations et un résultat ne présentant pas toutes les qualités requises.

Afin de résoudre ces difficultés en provoquant la rupture des copeaux de matière en cours de formation sans solliciter significativement la pièce en cours d'usinage et les moyens d'usinage, l'invention propose un procédé d'usinage selon la revendication 1.

La zone d'influence correspond à une zone située à proximité de l'arête de coupe sur une surface de coupe de l'extrémité de l'outil, zone dans laquelle les copeaux en cours de formation sont en contact avec l'outil coupant.

Afin de contrôler le moment auquel les copeaux sont brisés et se détachent de la pièce en cours d'usinage, géométrie de l'extrémité d'outil coupant est modifiée pour induire la rupture d'un copeau formé à un instant déterminé par un déplacement d'un élément mécanique dit brise copeaux de l'outil coupant dans la zone d'influence située à proximité de l'arête de coupe sur la surface de coupe de l'extrêmité de l'outil.

La géométrie est par exemple modifiée en agissant sur une distance d entre une partie avant du brise copeaux mobile et l'arête de coupe, par exemple la distance **d** est modifiée en cours d'un usinage entre une valeur inférieure **dmin** et une valeur supérieure **dmax.**

Dans un autre mode de mise en oeuvre du procédé, la géométrie de l'extrémité de l'outil coupant est modifiée en agissant sur une hauteur **h** d'une partie avant d'un brise copeaux par rapport à la surface de coupe, par exemple la hauteur **h** est modifiée en cours d'usinage entre une valeur inférieure **hmin** et une valeur supérieure **hmax.**

Pour adapter un même outil à différentes conditions d'usinage, la valeur inférieure **dmin, hmin,** et la valeur supérieure **dmax,** respectivement **hmax,** sont modifiées en fonction du matériau usiné et ou de la vitesse du déplacement relatif **Vu** et ou d'une profondeur **p** de passe d'usinage, données utilisées dans la détermination de conditions d'usinage.

Avantageusement la géométrie de l'extrémité de l'outil coupant est modifiée de manière périodique ou pseudo-périodique.

Lorsque des usinages complexes sont réalisés pour lesquels des paramètres d'usinages sont avantageusement optimisés au cours de l'usinage, la période ou pseudo-période et ou des amplitudes et ou des valeurs inférieures et ou supérieures sont modifiées pendant l'usinage compte tenu des matériaux ayant des propriétés d'usinage différentes.

Pour mettre en oeuvre le procédé, l'invention propose un outil d'usinage selon la revendication 7 comportant au moins une extrémité de coupe ayant une arête d'extrémité d'une surface de coupe et comportant un brise copeaux mobile agencé à proximité ou sur la surface de coupe de telle sorte qu'une zone avant dudit brise copeaux située proche de l'arête est mobile dans une zone d'influence avec laquelle un copeau de matière enlevée est en contact lors d'un usinage.

Pour contrôler les mouvements du brise copeaux, la zone avant est mobile au moyen d'un actionneur du brise copeaux mobile, par exemple un actionneur de type piézo-électrique, un actionneur de type électromagnétique, un actionneur de type magnéto-strictif, un actionneur de type mécanique, un actionneur de type hydraulique ou encore un actionneur de type pneumatique.

Dans une forme de réalisation pouvant être rapportée sur des outils d'usinage conventionnels, le brise copeaux mobile comporte un élément rapporté en forme de C comportant un corps, une première extrémité correspondant à la zone avant du brise copeaux mobile articulée sur le corps et une seconde extrémité opposée à la première extrémité sur le corps et fixe par rapport audit corps, de telle sorte que des faces terminales des première et seconde extrémités déterminent un volume dans lequel est agencé l'actionneur en appui sur les dites faces terminales.

Pour réaliser le contrôle des mouvements de l'extrémité mobile, l'outil d'usinage est incorporé dans un ensemble d'outillage qui comporte également des moyens de commande de l'actionneur déterminant à tout instant pendant un usinage la position voulue de la zone avant par rapport à l'arête.

Les moyens de commande sont en tout ou partie solidaire de l'outil d'usinage, ou afin de pouvoir être plus facilement utiliser avec plusieurs outils coupants en tout ou partie solidaire d'une machine d'entraînement de l'outil d'usinage ou en tout ou partie déporté de l'outil coupant et de la machine d'entraînement.

Les moyens de commande de l'actionneur déterminent des positions successives de la zone avant entre deux positions extrêmes au cours d'une opération d'usinage et de préférence les deux positions extrêmes sont modifiables par les moyens de commande de l'actionneur.

La zone avant du brise copeaux se déplace entre les deux positions extrêmes à une fréquence déterminée **Fbc** fonction de conditions d'usinage, avantageusement en fonction d'une vitesse de déplacement relatif **Vu** entre l'extrémité de coupe et une pièce en cours d'usinage.

Dans un mode de réalisation de l'outil d'usinage de l'invention, l'outil d'usinage est un foret ¾ pour la réalisation d'un alésage.

La présente invention est décrite en référence aux figures qui représentent :
Figure 1 : une illustration d'un usinage par enlèvement de matière suivant un procédé conventionnel ;
Figure 2 : une illustration d'un usinage par enlèvement de matière suivant le procédé de l'invention ;
Figures 3a à 3d : une illustration étapes par étapes de la mise en oeuvre du procédé pour briser un copeau ;
Figure 4 : une vue en perspective d'un exemple d'outil d'usinage suivant l'invention comportant un brise copeaux mobile ;
Figure 5 : une vue d'un exemple d'élément rapporté entrant dans la réalisation d'un brise copeaux.

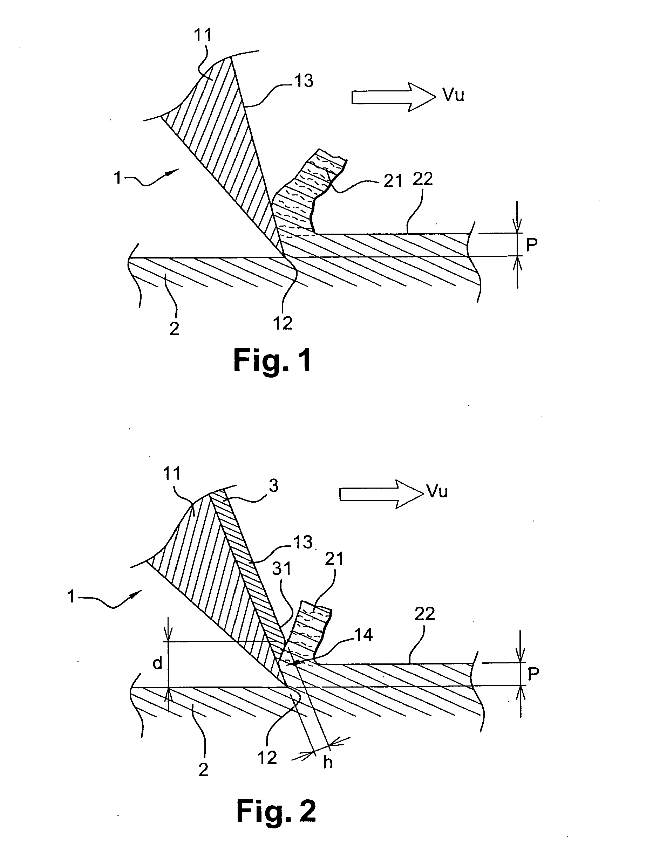

La figure 1 représente une opération d'usinage par enlèvement de matière à proximité de l'extrémité d'un outil coupant 1 dans le cas d'un usinage conventionnel d'une pièce 2.

L'extrémité 11 de l'outil, par exemple une lèvre d'un alésoir, se déplace par rapport à la pièce 2 suivant le sens de la flèche **Vu.**

Une arête d'extrémité 12 dans le prolongement d'une surface de coupe 13, c'est à dire une surface de l'extrémité 11 de l'outil située du côté avançant du déplacement relatif, pénètre d'une profondeur **p** dans le matériau de la pièce 2 par rapport à une surface 22 à usiner ce qui, en combinaison avec le déplacement relatif, provoque l'enlèvement d'un copeau 21 en cours de formation sur la figure 1.

Le copeau 21 en cours de formation, au moins sur une partie initiale de sa trajectoire suit la surface de coupe 13 dont la géométrie peut être adaptée pour faciliter le soulèvement du copeau 21.

La figure 2 présente une opération d'usinage suivant l'invention par enlèvement de matière dans des conditions voisines du cas connu présenté sur la figure 1.

Sur la figure 2 de l'invention les éléments similaires à ceux connus de la figure 1 sont identifiés par des repères identiques à la figure 1.

Suivant l'invention l'extrémité 11 de l'outil coupant 1 se déplace par rapport à la pièce 2, dans le sens de la flèche **Vu,** de telle sorte que l'arête de coupe 12 pénètre d'une profondeur d'usinage **p** dans la matière de la pièce 2 par rapport à la surface 22 de la pièce en cours d'usinage.

En outre un élément 3, dit brise copeau mobile, est agencé sur la surface de coupe 13 de telle sorte qu'une partie avant 31 dudit brise copeaux mobile, soumis à un déplacement périodique par rapport à la surface de coupe 13, se trouve près de l'arête 12.

Par « brise copeaux mobile », il faut comprendre que la position dudit élément formant le brise copeaux 3, au moins pour la partie avant 31 avec laquelle les copeaux 21 formés sont en contact lors de leurs soulèvements, est variable par rapport à la surface de coupe 13 au cours d'une opération d'usinage.

Par « près de l'arête de coupe », il faut comprendre que le brise copeaux 3 est agencé sur la surface de coupe 13 de sorte qu'au moins la partie avant 31 se trouve, au moins dans certaines positions que le brise copeaux mobile 3 est en mesure de prendre, dans une zone d'influence 14, en particulier à une distance d de l'arête de coupe 12, telle que le brise copeaux influence les conditions dans lesquelles un copeau 21 est détaché de la matière usinée lors du déplacement relatif de l'outil coupant 1 et de la pièce 2.

La zone d'influence 14 correspond sensiblement à une zone de l'extrémité 11 d'outil coupant avec laquelle les copeaux sont en contact lors de leur formation, c'est-à-dire une surface de l'outil coupant à proximité de l'arrête de coupe 12 sur laquelle surface le copeau glisse et se trouve soulevé au fur et à mesure de sa formation.

Cette zone correspond sur les outils coupants conventionnels à la zone fixe dont la géométrie est généralement conçue pour faciliter le soulèvement du copeau et sa rupture naturelle pour des conditions de coupe (matériau usiné, vitesse d'usinage....) données.

De préférence une valeur minimale **dmin** de la distance **d** entre l'arête de coupe 12 et la partie avant 31 du brise copeaux est comprise entre une et deux fois la valeur de la profondeur d'usinage **p,** valeur minimale qui est avantageusement ajustée en fonction du comportement des copeaux compte tenu des conditions d'usinage considérées, en particulier des caractéristiques de la matière enlevée.

Suivant le procédé de l'invention la géométrie de l'extrémité 11 de l'outil coupant est modifiée périodiquement par un mouvement du brise copeaux 3 par rapport à la surface de coupe 13 dans la zone d'influence 14 avec laquelle les copeaux sont en contact lors de leur formation.

L'amplitude **Abc** du mouvement périodique du brise copeaux et sa fréquence **Fbc** sont déterminés pour provoquer la rupture des copeaux formés par l'usinage lorsqu'un copeau atteint ou dépasse une certaine longueur **Lbc** choisie.

En particulier la fréquence **Fbc** est déterminée en fonction de la vitesse **Vu** à laquelle l'arête 12 se déplace par rapport à la pièce 2, par exemple une fréquence **Fbc** au moins égale à **Vu** / **Lbc** lorsque chaque cycle de déplacement du brise copeaux 3 doit provoquer une rupture du copeau 21.

L'amplitude **Abc** est avantageusement déterminée expérimentalement ou par calcul et confirmation expérimentale. Elle dépend a priori de nombreux paramètres tels que le matériau usiné, dont la ductilité a une grande influence sur la fragilité des copeaux, la profondeur **p** de l'usinage, la vitesse **Vu** d'usinage, la température du copeau en cours d'usinage ...

L'amplitude **Abc** dépend également de la géométrie propre du brise copeaux 3 dont la géométrie et les dimensions sont avantageusement adaptées en fonction des conditions de coupe auxquelles est destiné l'outil et de son effet sur la géométrie de l'extrémité de coupe 11.

Par exemple suivant un premier mode de mise en oeuvre du procédé, le brise copeaux mobile 3 est déplacé périodiquement suivant un sens de déplacement sensiblement parallèle à la surface de coupe 13 en réduisant et en augmentant alternativement la distance **d,** entre une distance **dmin,** valeur inférieure de **d,** et une distance **dmax,** valeur supérieure de **d,** de la zone avant 31 du brise copeaux par rapport à l'arête 12 pendant l'usinage.

Suivant un second mode de mise en oeuvre du procédé, le brise copeau 3 est déplacé périodiquement suivant un sens de déplacement sensiblement perpendiculaire à la surface de coupe 13 en réduisant et en augmentant une hauteur **h** caractéristique d'une hauteur du brise copeaux 3 par rapport à la surface de coupe 13, la hauteur **h** variant entre une hauteur **hmin,** valeur inférieure de **h,** et une hauteur **hmax,** valeur supérieure de **h,** pendant l'usinage.

Il doit être compris que suivant le procédé de l'invention d'autres types de déplacements du brise copeaux 3 par rapport à la surface 13 sont possibles dés lors que la géométrie de l'extrémité de coupe 11 se trouve modifiée pendant l'usinage de manière périodique ou pseudo-périodique avec pour conséquence de briser le copeau en cours de soulèvement pendant l'opération d'usinage.

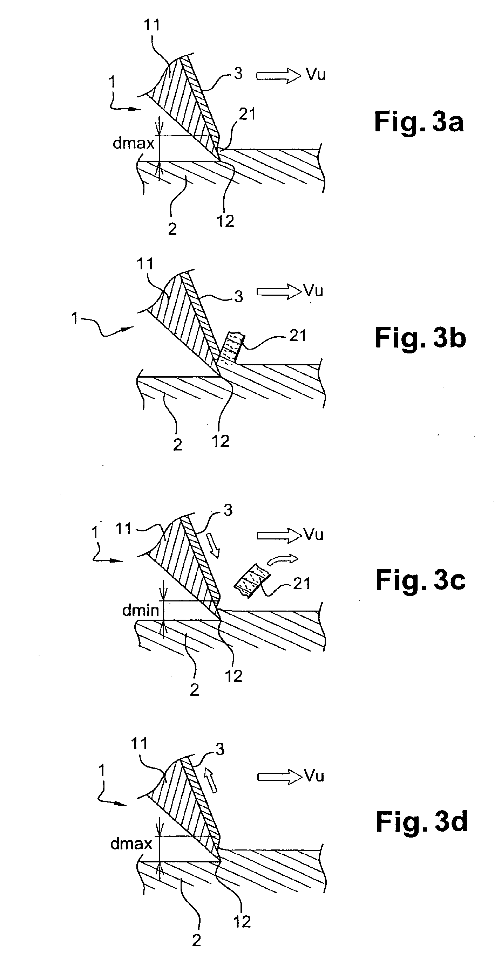

A titre d'illustration du procédé, les figures 3a à 3d montre une séquence d'un cycle du déplacement du brise copeaux 3 dans le cas d'un brise copeaux dont le déplacement est commandé dans une direction parallèle à la surface de coupe 13 entre une distance **dmin** et une distance **dmax** de l'arête 12.

Figure 3a le brise copeaux 3 est à une distance **dmax** éloignée de l'arête 12 et le copeau 21 commence à être formé par un enlèvement de matière de la pièce 2. Au fur et à mesure que l'arête 12 de l'extrémité de coupe 11 se déplace par rapport à la pièce 2, le copeau 21 s'allonge et est soulevé et progressivement repoussé vers le brise copeaux 3, figure 3b, dont la géométrie de la zone avant 31 participe au soulèvement du copeau 21 en cours de formation et à son dégagement.

Lorsque le copeau 21 atteint une longueur prédéfinie, en pratique lorsque l'arête 12 s'est déplacée sur une distance prédéfinie depuis le début de la formation du copeau (figure 3a) équivalente à une durée **Δt** compte tenu de la vitesse **Vu** de déplacement de l'arête par rapport à la pièce, le brise copeaux 3 est déplacé (figure 3c) en direction de l'arête 12 pour réduire la distance à une valeur minimale **dmin.**

Sous l'effet de cette modification de la géométrie de l'extrémité de coupe 11, le copeau, fragilisé par l'usinage et éventuellement compte tenu d'une température augmentée par ledit usinage, se brise et se détache avant d'avoir atteint une longueur plus importante comme illustré sur la figure 3c.

Le brise copeaux 3 est alors ramené en position éloigné de l'arête à la distance **dmax** comme illustré sur la figure 3d.

On comprend que le déplacement du brise copeaux 3 peut être réalisé suivant différents modes.

Par exemple le déplacement du brise copeaux 3 entre les positions correspondant aux valeurs **dmax** et **dmin** est progressif en suivant des lois de variation de la distance **d** en forme de sinusoïde ou en forme de dents de scie.

Par exemple le déplacement du brise copeaux 3 est impulsionnel, une position « normale » correspondant à la distance **dmax** et le brise copeaux prenant la position correspondant à la distance **dmin** de manière quasi instantanée pour une durée courte devant la durée d'un cycle.

Il doit être noté que ces exemples de déplacement du brise copeaux ne sont pas limitatifs et que le procédé peut être mis en oeuvre en inversant les rôles des distances **dmin** et **dmax,** ou en remplaçant ces distances par des hauteurs **hmin** et **hmax,** séquence non illustrée mais similaire à la séquence des figures 3a à 3d dans laquelle la hauteur **h** du brise copeaux 3 est modifiée.

Dans un mode particulier de mise en oeuvre du procédé, les positions extrêmes prises par le brise copeaux 3 lors d'une opération d'usinage sont modifiées en fonction de paramètres d'usinage particuliers de l'usinage considéré.

Par exemple, dans l'exemple illustré sur les figures 3a à 3d décrit précédemment, chacune des valeurs **dmin** et/ou **dmax** est modifiée.

On comprend mieux l'intérêt d'une telle mise en oeuvre car il est alors possible d'adapter un même outil 1, comportant un brise copeaux 3 mobile suivant l'invention, à différents paramètres d'usinage, c'est à dire par exemple lorsque le matériau usiné ou les vitesses de coupe ou la profondeur d'usinage ... sont modifiés.

Non seulement il est alors possible de limiter le nombre de modèles d'outils nécessaires dans un atelier tout en bénéficiant des avantages de l'invention, mais il est également possible de réaliser des usinages, en particulier des alésages, dans un empilement de pièces réalisées avec des matériaux différents en optimisant les positions et les mouvements du brise copeaux 3 lors de l'usinage de chaque matériau au cours de la réalisation de l'alésage.

L'invention concerne également l'outil 1 d'usinage selon la revendication 7 destiné à la mise en oeuvre du procédé.

Dans un tel outil comme il est décrit pour les besoins du procédé, un brise copeaux mobile 3 est agencé près d'une arête 12 d'une extrémité de coupe 11 dans une zone d'une surface de coupe 13 sur laquelle des copeaux 21 en cours de formation sont repoussés lors de la réalisation d'un usinage.

Lorsqu'un outil comporte plusieurs extrémités de coupe, comme par exemple dans le cas d'une fraise à plusieurs lèvres, de préférence chaque extrémité de coupe comporte un brise copeaux mobile.

Le brise copeaux mobile 3 consiste essentiellement en un élément rapporté sur ou à proximité de la surface de coupe 13 de l'outil 1 et dont la zone avant 31 du côté de l'arête 12 est située suffisamment proche de ladite arête pour agir sur le copeau pendant sa formation.

Le brise copeaux mobile 3 comporte également au moins un dispositif dit actionneur qui agit sur l'élément rapporté pour déplacer ledit élément, au moins pour une partie active de celui-ci, entre au moins deux positions extrêmes et comporte des moyens de pilotage de l'actionneur.

Le choix d'un actionneur est dicté par des contraintes de dimensions et d'intégration à l'outil coupant 1 qui peuvent être très variables suivant le type d'outil et le type d'usinage.

Les contraintes sont a priori plus fortes lorsqu'il s'agit d'un outil 1 mobile, par exemple une alésoir entraîné en rotation lors d'une opération de perçage, que lorsqu'il s'agit d'un outil 1 fixe ou peu mobile, par exemple un outil de tour.

Dans une forme de réalisation, l'actionneur est du type électrique, par exemple par l'utilisation de matériaux piézo-électriques ou de matériaux magnétiques ou de matériaux magnéto-strictifs.

Dans d'autres formes de réalisation, l'actionneur est de type mécanique, pneumatique ou hydraulique.

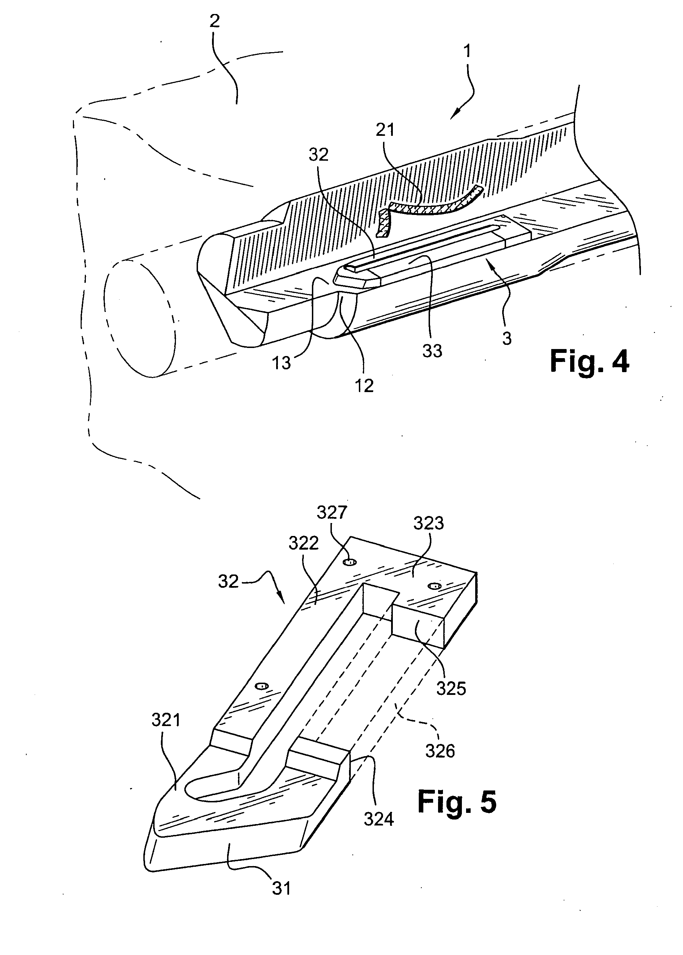

Les figures 4 et 5 illustrent de manière non restrictive un exemple de réalisation d'un outil 1 suivant l'invention, en l'occurrence un foret ¾, mettant en oeuvre un actionneur piézo-électrique, technologie qui s'avère présenter des avantages tant pour la réalisation de l'outil que pour sa mise en oeuvre.

Dans la réalisation décrite du brise copeaux 3, l'élément rapporté 32, représentée seule sur la figure 5, présente une allure générale en C dont une des extrémités qui correspond à la zone avant 31 du brise copeaux est liée au corps 322 du C par une zone striction 321 formant une charnière élastique.

Le C est par exemple réalisé en acier ou dans un autre matériau à haut module élastique.

L'autre extrémité 323 du C est liée rigidement au corps 322.

Chaque extrémité 31, 323 du C présente une face terminale 324, respectivement 325, les dites faces terminales des dites extrémités étant sensiblement en vis à vis et séparées par un espace 326 matérialisé par un volume défini en trait discontinu sur la figure 5.

L'élément rapporté 32 est fixé sur une lèvre du foret ¾ qui correspond à la surface de coupe 13 de sorte que la zone avant 31 soit correctement positionnée près de l'arête 12.

L'élément rapporté 32 est fixé par le corps 322 et le cas échéant l'extrémité 323 du C en prenant soins de laisser l'extrémité 31 libre et mobile autour de la charnière 321. La fixation de l'élément rapporté 32 sur la lèvre du foret est réalisée par exemple par brasage ou par des fixations rapportées traversant des trous de fixation 327 du C ou encore par des brides, solution non représentée, suivant par exemple une des techniques connues utilisées pour fixer des plaquettes de coupe en carbure sur les outils coupants ce qui permet d'envisager un remplacement de l'élément rapporté ou sa récupération pour une réutilisation.

Un actionneur de type piézo-électrique 33 est placé à l'emplacement disponible 326 entre les extrémités du C et prend appui entre les faces terminales 324, 325 du C de sorte que, lorsque l'actionneur est raccourci ou rallongé au moyen d'un signal électrique, la zone avant 31 subit un déplacement dans un sens longitudinal du corps 322 du C du fait d'une rotation autour de la charnière élastique 321 seule partie sensiblement déformable du C, ce qui conduit à la rupture du copeau 21 pendant l'usinage de la pièce 2.

Des fils d'alimentation électrique, non représentés, alimentent l'actionneur piézo-électrique avec un signal de commande issu d'un générateur associé au dispositif d'usinage.

Un tel générateur est avantageusement déporté par rapport à la zone d'usinage de l'outil ce qui le protège des conditions d'environnement sévères liées à l'usinage et permet de le dissocier aisément de l'outil coupant proprement dit qui doit être remplacé fréquemment en raison d'usures rapides.

Dans un mode de réalisation, le générateur est fixé à un dispositif d'entraînement de l'outil 1, par exemple une tête tournante, et dispose d'une génération d'énergie intégrée ou extérieure.

Dans un autre mode de réalisation, le générateur n'est pas entraîné avec l'outil et est solidaire de la machine entraînant l'outil ou d'une installation fixe.

Dans tous les cas, lorsque la solution nécessite de faire appel à des contacts tournants ou glissants entre le générateur ou une partie du générateur et l'actionneur, il est notable que les puissances en jeu ainsi que les vitesses de glissement sont relativement modestes et ne présentent pas de contraintes particulières de réalisation.

Dans l'exemple pour une solution mettant en oeuvre un actionneur piézo-électrique, la force développée par l'actionneur est déterminée par une section des éléments piézo-électriques entrant dans la réalisation de l'actionneur, et la course de l'actionneur, c'est à dire la différence entre la longueur minimale et la longueur maximale dudit actionneur, est déterminée par un nombre d'éléments piézo-électriques formant la partie active de l'actionneur. Le choix des dimensions de l'élément en forme en C rapporté 32, en particulier la distance entre les faces terminales 324, 325 et les dimensions des dites faces permettent donc de réaliser le brise copeaux 3 avec les capacités voulues.

Pour éviter que le brise copeaux et ses composants fragiles risquent d'être endommagés pendant l'usinage, des moyens de protection mécaniques, par exemple un capot non représenté, sont avantageusement prévus.

Pour mettre en oeuvre un tel outil, une tension de commande, par exemple une tension alternative à la fréquence **Fbc** est générée pour alimenter l'actionneur piézo-électrique, dont la fréquence et l'amplitude sont déterminée pour les conditions de coupe prévues.

Une tension continue, dite tension d'offset, est le cas échéant superposée à la tension alternative afin de décaler simultanément les positions entre lesquelles la zone avant 31 se déplace pour adapter le point de fonctionnement du brise copeaux 3.

Le procédé et le dispositif d'usinage suivant l'invention permettent donc de réaliser des usinages de qualités améliorées en assurant, sans générer d'efforts parasites dans la pièce et dans le dispositif d'usinage, la rupture des copeaux de matière enlevée lors de l'usinage de manière contrôlée afin de permettre une évacuation aisée des dits copeaux.

## Revendications

1. Procédé d'usinage par enlèvement de matière, dans lequel la matière enlevée d'une pièce (2) en cours d'usinage par un outil coupant (1) forme des copeaux (21) au niveau d'une arête de coupe (12) d'une extrémité (11) d'outil coupant par un déplacement relatif **Vu** de ladite extrémité d'outil coupant par rapport à ladite pièce en cours d'usinage et dans lequel les copeaux (21) en cours de formation glissent sur et sont soulevés par une surface d'une zone d'influence (14) de l'outil coupant (1) de sorte à induire la rupture desdits copeaux en cours de formation, **caractérisé en ce que** la géométrie de la zone d'influence (14) est modifiée de manière contrôlée au cours de l'usinage au moyen d'un brise copeaux mobile (3) de l'outil coupant (1), de sorte à modifier périodiquement ou pseudo-périodiquement les conditions dans lesquelles les copeaux (21) en cours de formation sont soulevés avant leurs ruptures.

2. Procédé d'usinage suivant la revendication 1 dans lequel la géométrie de la zone d'influence (14) de l'outil coupant est modifiée à un instant déterminé de sorte à induire la rupture d'un copeau (21) en cours de formation.

3. Procédé d'usinage suivant la revendication 2 dans lequel la géométrie de la zone d'influence (14) de l'outil coupant est modifiée en cours d'un usinage en agissant sur une distance **d** entre une partie avant (31) du brise copeaux (3) mobile et l'arête de coupe (12), la distance **d** étant modifiée entre une valeur inférieure **dmin** et une valeur supérieure **dmax.**

4. Procédé d'usinage suivant la revendication 2 dans lequel la géométrie de la zone d'influence (14) de l'outil coupant est modifiée en cours d'usinage en agissant sur une hauteur **h** d'une partie avant (31) du brise copeaux (3) par rapport à une surface de coupe (13) de l'extrémité (11) d'outil coupant, la hauteur **h** étant modifiée entre une valeur inférieure **hmin** et une valeur supérieure **hmax.**

5. Procédé d'usinage suivant la revendication 3 ou la revendication 4 dans lequel la valeur inférieure **dmin, hmin,** et la valeur supérieure **dmax,** respectivement **hmax,** sont modifiées en fonction du matériau usiné et ou de la vitesse du déplacement relatif Vu et ou d'une profondeur p de passe d'usinage, données utilisées dans la détermination de conditions d'usinage.

6. Procédé d'usinage suivant l'une des revendications précédentes dans lequel la période ou pseudo-période et ou des amplitudes et ou des valeurs inférieures et ou des valeurs supérieures sont modifiées pendant un usinage d'une pièce, formée d'un assemblage d'éléments comportant différents matériaux, en fonction de propriétés d'usinage du matériau en cours d'usinage de la pièce.

7. Outil d'usinage (1) comportant au moins une extrémité de coupe (11) comportant une arête (12) d'extrémité d'une surface de coupe (13) et une zone d'influence (14) de ladite extrémité de coupe sur une surface de laquelle zone d'influence glisse et est soulevé un copeau en cours de formation de sorte à induire la rupture du copeau en cours de formation, lorsque l'outil d'usinage est utilisé, **caractérisé en ce que** ledit outil d'usinage comporte un brise copeaux mobile (3) agencé de telle sorte qu'une zone avant (31) dudit brise copeaux est située dans la zone d'influence (14), ledit brise copeaux mobile comportant un actionneur (33) agencé pour déplacer de manière périodique ou pseudo-périodique en cours d'usinage la zone avant (31) du brise copeaux de sorte à modifier en cours d'usinage la géométrie de la zone d'influence (14) et les conditions dans lequel le copeau est soulevé avant sa rupture.

8. Outil d'usinage suivant la revendication 7 dans lequel l'actionneur (33) du brise copeaux mobile (3) est un actionneur de type piézo-électrique ou de type électromagnétique ou de type magnéto-strictif ou de type mécanique ou de type hydraulique ou de type pneumatique.

9. Outil d'usinage suivant la revendication 8 dans lequel le brise copeaux mobile (3) comporte un élément (32) en forme de C comportant un corps (322), une première extrémité correspondant à la zone avant (31) du brise copeaux mobile (3) articulée sur le corps (322) et une seconde extrémité (323) opposée à la première extrémité sur le corps (322) et fixe par rapport audit corps, de telle sorte que des faces terminales (324, 325) des première (31) et seconde (323) extrémités déterminent un volume (326) dans lequel est agencé l'actionneur (33) en appui sur les dites faces terminales.

10. Ensemble d'outillage comportant un outil d'usinage (1) conforme à l'une des revendications 7, 8 ou 9 et comportant des moyens de commande qui commandent l'actionneur (33) de sorte à déterminer une position voulue de la zone avant (31) du brise copeaux mobile (3) de l'outil d'usinage (1).

11. Ensemble d'outillage suivant la revendication 10 dans lequel tout ou partie des moyens de commande de l'actionneur (33) est solidaire de l'outil d'usinage (1).

12. Ensemble d'outillage suivant la revendication 10 dans lequel tout ou partie des moyens de commande de l'actionneur (33) est déporté de l'outil d'usinage (1).

13. Ensemble d'outillage suivant l'une des revendications 10, 11 ou 12 dans lequel les moyens de commande commandent l'actionneur (33) de sorte à déterminer au cours d'une opération d'usinage des positions successives de la zone avant (31) entre deux positions extrêmes.

14. Ensemble d'outillage suivant la revendication 13 dans lequel les moyens de commande de l'actionneur (33) sont aptes à modifier les positions des deux positions extrêmes.

15. Ensemble d'outillage suivant la revendication 13 ou la revendication 14 dans lequel les moyens de commande commandent un déplacement de la zone avant (31) entre les deux positions extrêmes à une fréquence déterminée **Fbc** fonction de conditions d'usinage.

16. Ensemble d'outillage suivant la revendication 15 dans lequel la fréquence **Fbc** du déplacement de la zone avant (31) entre les deux positions extrêmes est déterminée en fonction d'une vitesse de déplacement relatif **Vu** entre l'extrémité de coupe (11) et une pièce (2) en cours d'usinage.

17. Foret ¾ pour la réalisation d'un alésage conforme à un outil d'usinage suivant l'une des revendications 7 à 9.

18. Ensemble d'outillage suivant l'une des revendications 10 à 16 dans lequel l'outil d'usinage est un foret ¾.

## Claims

1. Method for machining by removal of material, in which the material removed from a part (2) being machined by a cutting tool (1) forms chips (21) at a cutting edge (12) of a cutting-tool end (11) by a relative movement **Vu** of the said cutting-tool end relative to the said part during machining and in which the chips (21) being formed slide on and are lifted by a surface of a zone of influence (14) of the cutting tool (1) so as to induce the breakage of the said chips being formed, **characterized in that** the geometry of the zone of influence (14) is modified in a controlled manner during the machining by means of a movable chip breaker (3) of the cutting tool (1) so as to periodically or pseudo-periodically modify the conditions in which the chips (21) being formed are lifted before they are broken.

2. Machining method according to Claim 1, in which the geometry of the zone of influence (14) of the cutting tool is modified at a determined moment so as to induce the breakage of a chip (21) being formed.

3. Machining method according to Claim 2, in which the geometry of the zone of influence (14) of the cutting tool is modified during a machining by acting over a distance **d** between a front portion (31) of the movable chip breaker (3) and the cutting edge (12), the distance d being modified between a lower value **dmin** and an upper value **dmax.**

4. Machining method according to Claim 2, in which the geometry of the zone of influence (14) of the cutting tool is modified during machining by acting over a height **h** of a front portion (31) of the chip breaker (3) relative to a cutting surface (13) of the cutting tool end (11), the height **h** being modified between a lower value **hmin** and an upper value **hmax.**

5. Machining method according to Claim 3 or Claim 4, in which the flower value **dmin, hmin,** and the upper value **dmax,** respectively **hmax,** are modified according to the material machined and/or the speed of relative movement Vu and/or a depth **p** of machining pass, which data is used in the determination of machining conditions.

6. Machining method according to one of the preceding claims, in which the period or pseudo-period and/or amplitudes and/or lower values and/or upper values are modified during a machining of a part, formed of an assembly of elements comprising various materials, as a function of properties of machining of the material being machined of the part.

7. Machining tool (1) comprising at least one cutting end (11) comprising an end edge (12) of a cutting surface (13) and a zone of influence (14) of the said cutting end on a surface of which zone of influence slides and a chip being formed is lifted so as to induce the breakage of the chip being formed, when the machining tool is used, **characterized in that** the said machining tool comprises a movable chip breaker (3) arranged so that a front zone (31) of the said chip breaker is situated in the zone of influence (14), the said movable chip breaker comprising an actuator (33) arranged to move periodically or pseudo-periodically during machining the front zone (31) of the chip breaker so as to modify, during machining, the geometry of the zone of influence (14) and the conditions in which the chip is lifted before it breaks.

8. Machining tool according to Claim 7, in which the actuator (33) of the movable chip breaker (3) is an actuator of piezoelectric type or of electromagnetic type or of magnetostrictive type or of mechanical type or of hydraulic type or of pneumatic type.

9. Machining tool according to Claim 8, in which the movable chip breaker (3) comprises a C-shaped element (32) comprising a body (322), a first end corresponding to the front zone (31) of the movable chip breaker (3) articulated on the body (322) and a second end (323) opposite to the first end on the body (322) and fixed relative to the said body, so that terminal faces (324, 325) of the first end (31) and second end (323) determine a volume (326) in which the actuator (33) is arranged pressing on the said terminal faces.

10. Toolage assembly comprising a machining tool (1) according to one of Claims 7, 8 or 9 and comprising control means which control the actuator (33) so as to determine a desired position of the front zone (31) of the movable chip breaker (3) of the machining tool (1).

11. Toolage assembly according to Claim 10, in which all or some of the means for controlling the actuator (33) are secured to the machining tool (1).

12. Toolage assembly according to Claim 10, in which all or some of the means for controlling the actuator (33) are remote from the machining tool (1).

13. Toolage assembly according to one of Claims 10, 11 or 12, in which the control means control the actuator (33) so as to determine, during a machining operation, successive positions of the front zone (31) between two extreme positions.

14. Toolage assembly according to Claim 13, in which the means for controlling the actuator (33) are capable of modifying the positions of the two extreme positions.

15. Toolage assembly according to Claim 13 or Claim 14, in which the control means control a movement of the front zone (31) between the two extreme positions at a determined frequency **Fbc** depending on the machining conditions.

16. Toolage assembly according to Claim 15, in which the frequency **Fbc** of the movement of the front zone (31) between the two extreme positions is determined according to a relative speed of movement **Vu** between the cutting end (11) and a part (2) being machined.

17. ¾ drill for producing a bore conforming with a machining tool according to one of Claims 7 to 9.

18. Toolage assembly according to one of Claims 10 to 16, in which the machining tool is a ¾ drill.

## Patentansprüche

1. Bearbeitungsverfahren durch Abtragen von Werkstoff, bei dem der von einem Werkstück (2) im Laufe des Bearbeitens durch ein Schneidwerkzeug (1) abgetragene Werkstoff Späne (21) auf dem Niveau einer Schneidkante (12) eines Endes (11) eines Schneidwerkzeugs durch eine relative Bewegung **Vu** des Schneidwerkzeugendes in Bezug zu dem in Bearbeitung befindlichen Werkstück bildet, und bei dem die Späne (21) im Laufe ihres Bildens von einer Oberfläche eines Einflussbereichs (14) des Schneidwerkzeugs (1) gleiten und hochgehoben werden, so dass der Bruch der Späne im Laufe des Bildes eingeleitet wird, **dadurch gekennzeichnet, dass** die Geometrie des Einflussbereichs (14) im Laufe des Bearbeitens mittels eines beweglichen Spanbrechers (3) des Schneidwerkzeugs (1) gesteuert geändert wird, so dass die Bedingungen, unter welchen die Späne (21) im Laufe des Bildens angehoben werden, periodisch oder pseudoperiodisch vor ihren Brüchen geändert werden.

2. Bearbeitungsverfahren nach Anspruch 1, bei dem die Geometrie des Einflussbereichs (14) des Schneidwerkzeugs in einem bestimmten Augenblick geändert wird, so dass der Bruch eines Spans (21) im Laufe des Bildens eingeleitet wird.

3. Bearbeitungsverfahren nach Anspruch 2, bei dem die Geometrie des Einflussbereichs (14) des Schneidwerkzeugs im Laufe eines Bearbeitens geändert wird, indem auf eine Entfernung **d** zwischen einem Vorderteil (31) des beweglichen Spanbrechers (3) und der Schneidkante (12) eingewirkt wird, wobei die Entfernung **d** zwischen einem unteren Wert **dmin** und einem oberen Wert **dmax** geändert wird.

4. Bearbeitungsverfahren nach Anspruch 2, bei dem die Geometrie des Einflussbereichs (14) des Schneidwerkzeugs im Laufe des Bearbeitens geändert wird, indem auf eine Höhe **h** eines Vorderteils (31) des Spanbrechers (3) in Bezug zu einer Schneidoberfläche (13) des Endes (11) des Schneidwerkzeugs eingewirkt wird, wobei die Höhe h zwischen einem unteren Wert **hmin** und einem oberen Wert **hmax** geändert wird.

5. Bearbeitungsverfahren nach Anspruch 3 oder Anspruch 4, bei dem der untere Wert **dmin, hmin** und der obere Wert **dmax** bzw. **hmax** in Abhängigkeit von dem bearbeiteten Werkstoff und/oder der relativen Bewegungsgeschwindigkeit **Vu** und/oder der Tiefe **p** des Bearbeitungsdurchgangs, Daten, die bei dem Bestimmen von Bearbeitungsbedingungen verwendet werden, geändert wird.

6. Bearbeitungsverfahren nach einem der vorhergehenden Ansprüche, bei dem die Periode oder Pseudoperiode und/oder Amplituden und/oder unteren Werte und/oder oberen Werte während einer Bearbeitung eines Werkstücks, das aus einer Anordnung von Elementen besteht, die unterschiedliche Werkstoffe aufweisen, in Abhängigkeit von Bearbeitungseigenschaften des Werkstoffs im Laufe des Bearbeitens des Werkstücks geändert werden.

7. Bearbeitungswerkzeug (1), das wenigstens ein Schneidende (11) aufweist, das eine Endkante (12) einer Schneidoberfläche (13) aufweist, und einen Einflussbereich (14) des Schneidendes auf einer Oberfläche, wobei von dem Einflussbereich ein Span gleitet und im Laufe des Bildens so angehoben wird, dass der Bruch des Spans im Laufe des Bildens eingeleitet wird, wenn das Bearbeitungswerkzeug verwendet wird, **dadurch gekennzeichnet, dass** das Bearbeitungswerkzeug einen beweglichen Spanbrecher (3) aufweist, der derart eingerichtet ist, dass eine vordere Zone (31) des Spanbrechers in dem Einflussbereich (14) liegt, wobei der bewegliche Spanbrecher ein Betätigungselement (33) aufweist, das eingerichtet ist, um im Laufe des Bearbeitens die vordere Zone (31) des Spanbrechers so zu bewegen, dass im Laufe des Bearbeitens die Geometrie des Einflussbereiahs (14) und die Bedingungen, unter welchen der Span vor seinem Bruch angehoben wird, geändert werden.

8. Bearbeitungswerkzeug nach Anspruch 7, bei dem das Betätigungselement (33) des beweglichen Spanbrechers (3) ein Betätigungselement des piezoelektrischen Typs oder elektromagnetischen Typs oder des magnetisch-induktiven oder des mechanischen Typs oder des hydraulischen Typs oder des pneumatischen Typs ist.

9. Bearbeitungswerkzeug nach Anspruch 8, bei dem der bewegliche Spanbrecher (3) ein Element (32) in C-Form aufweist, das einen Körper (322) aufweist, ein erstes Ende, das der vorderen Zone (31) des beweglichen Spanbrechers (3) auf dem Körper (322) angelenkt entspricht, und ein zweites Ende (323), das dem ersten Ende auf dem Körper (322) gegenüber liegt und in Bezug zu dem Körper stationär ist, so dass die Endseiten (324, 325) des ersten (31) und des zweiten (323) Endes ein Volumen (326) bestimmen, in dem das Betätigungselement (33) in Auflage auf den Endseiten eingerichtet ist.

10. Werkzeuganordnung, die ein Bearbeitungswerkzeug (1) gemäß einem der Ansprüche 7, 8 oder 9 und Steuermittel aufweist, die das Betätigungselement (33) so steuern, dass eine gewünschte Position der vorderen Zone (31) des beweglichen Spanbrechers (3) des Bearbeitungswerkzeugs (1) bestimmt wird.

11. Werkzeuganordnung nach Anspruch 10, bei der alle oder ein Teil der Steuermittel des Betätigungselements (33) mit dem Bearbeitungswerkzeug (1) fest verbunden ist/sind.

12. Werkzeuganordnung nach Anspruch 10, bei der alle oder ein Teil der Steuermittel des Betätigungsmittels (33) von dem Bearbeitungswerkzeug (1) versetzt ist/sind.

13. Werkzeuganordnung nach einem der Ansprüche 10, 11 oder 12, bei der die Steuermittel das Betätigungselement (33) derart steuern, dass im Laufe eines Bearbeitungsvorgangs aufeinanderfolgende Positionen der vorderen Zone (31) zwischen zwei Endpositionen bestimmt werden.

14. Werkzeuganordnung nach Anspruch 13, bei der die Steuermittel des Betätigungselements (33) geeignet sind, um die Positionen der zwei Endpositionen zu ändern.

15. Werkzeuganordnung nach Anspruch 13 oder Anspruch 14, bei der die Steuermittel eine Bewegung der vorderen Zone (31) zwischen den zwei Endpositionen mit einer bestimmten Häufigkeit **Fbc,** die von den Bearbeitungsbedingungen abhängt, steuern.

16. werkzeuganordnung nach Anspruch 15, bei der die Häufigkeit **Fbc** der Bewegung der vorderen Zone (31) zwischen den zwei Endpositionen in Abhängigkeit von einer relativen Bewegungsgeschwindigkeit **Vu** zwischen dem Schneidende (11) und einem Werkstück (2), das sich in Bearbeitung befindet, bestimmt wird.

17. ¾-Bohrer zum Herstellen einer Bohrung gemäß einem Bearbeitungswerkzeug gemäß einem der Ansprüche 7 bis 9.

18. Werkzeugeinheit nach einem der Ansprüche 10 bis 16, bei der das Bearbeitungswerkzeug ein ¾-Bohrer ist.
